Europäisches Patentamt

European Patent Office

Office européen des brevets

(11) Publication number: **0 125 146**
**B1**

# EUROPEAN PATENT SPECIFICATION

(45) Date of publication of patent specification: **11.10.89**

(51) Int. Cl.⁴: **B 29 D 30/08**

(21) Application number: **84303145.1**

(22) Date of filing: **09.05.84**

(54) Roller centering apparatus.

(30) Priority: **09.05.83 US 493086**

(43) Date of publication of application:
**14.11.84 Bulletin 84/46**

(45) Publication of the grant of the patent:
**11.10.89 Bulletin 89/41**

(84) Designated Contracting States:
**DE FR GB IT LU**

(56) References cited:
US-A-3 192 094
US-A-3 641 855
US-A-3 654 828
US-A-3 762 259

(73) Proprietor: **THE FIRESTONE TIRE & RUBBER COMPANY**
**1200 Firestone Parkway**
**Akron, Ohio 44317 (US)**

(72) Inventor: **Still, Donald O.**
**1052 Green Valley Drive**
**Akron Ohio 44319 (US)**
Inventor: **Hovance, Hubert T.**
**4469 Lakewood Road**
**Ravenna Ohio 44266 (US)**
Inventor: **Burley, George J.**
**5791 Dave Drive**
**Clinton Ohio 44216 (US)**

(74) Representative: **Bass, John Henton et al**
**REDDIE & GROSE 16 Theobalds Road**
**London WC1X 8PL (GB)**

EP 0 125 146 B1

Courier Press, Leamington Spa, England.

## Description

This invention relates to a method and apparatus for positioning elastomeric material within a processing machine. It particularly relates to a method and apparatus adapted to apply stabiliser ply material.

The typical prior art procedure for cutting tire stabiliser plies having biased reinforcing cords and transferring same to a drum involves an operator utilising a manual tire assembly machine. The operator pulls the leading edge of the stabiliser ply material from a server and affixes the leading end to a tire building drum. The drum is then caused to be rotated by the operator. The tire stabiliser ply material is then wrapped about the drum. The tire building drum is caused to make approximately one complete revolution after which its rotation is stopped. The operator then manually determines where the stabiliser ply material should be cut and then manually makes the cut of the stabiliser ply material along the axis of the cord members embedded therein in such a fashion as to cut the material between the cord members. The operator then manually manipulates the trailing edge of the stabiliser ply material in order to cause it to abut the leading edge of the stabiliser ply material. Often this requires considerable adjustment on the part of the operator since the angle of the cords at the leading edge of the stabiliser ply material may vary substantially from the angle of the cords in the trailing edge of the stabiliser ply material. After the operator has sufficiently adjusted by twisting and stretching the trailing edge of the stabiliser ply material, the two edges are abutted and stitched in order to form the stabiliser ply.

US-A-3 192 094 (from which the features of the pre-characterising parts of the independent claims are known) discloses a machine for bias cutting a tire fabric comprising a fabric feeding means and a cutting means; the fabric feeding means being pivotally located at an angle to the cutting means. This angle is selected manually and determines the bias cut angle of the fabric. The fabric feeding means includes a roller over which the fabric runs. The roller remains at a constant angular orientation with respect to the fabric, angular adjustment being effected solely at the pivotal junction between the feeding and cutting means.

There is a need for an apparatus which may be utilised to automatically sever a portion of stabiliser ply material having cords biased at an angle therein from a continuous roll of such material and apply same to a tire building drum wherein the leading edge of the stabiliser ply material and the trailing edge of the stabiliser ply material may be automatically aligned in order to produce an improved butt splice of the respective edges.

The present invention relates to a means and method for positioning elastomeric material within a processing machine such as used in the application of stabiliser ply material to a tire building drum and more particularly to a means and method for centering the stabiliser material in the ply applicator.

The present invention provides a method for positioning an elastomeric sheet material within a processing machine by transporting said material over at least one rotatable member; and rotating said rotatable member about an axis orthogonal to the surface of said material, characterised by: sensing the location of one edge of said material; providing an output responsive to the sensing of the location of said one edge of said material; contacting the surface of said material with surface engaging means on said at least one rotatable member; and rotating said at least one member about said orthogonal axis in response to the output responsive to the sensing of the location of one edge of said material.

The present invention also provides an apparatus for positioning a length of elastomeric material within a processing machine, comprising a material support including at least two rotatable members, and steering means for displacing angularly said rotatable members about an axis orthogonal to said elastomeric material; characterised by: edge sensing means adapted to sense the edge of said length of elastomeric material; means disposed about the peripheries of said rotatable members to engage the surface of said material as it advances; and control means in electrical communication with said edge sensing means and said steering means and adapted to control said steering means in response to electrical signals received from said edge sensing means.

The invention will be described in more detail, by way of example, with reference to the accompanying drawings, in which:

Figure 1 is a side elevation of the stabiliser ply applicator embodying the instant invention;

Figure 2 is a simplified perspective drawing showing the main operative elements of the stabiliser ply applicator shown in Figure 1;

Figure 3 is a front view of the ply applicator employed by the instant invention;

Figure 4 is a left side view of the ply applicator disclosed in Figure 3;

Figure 5 is a plan view of the guiding means employed by the instant invention;

Figure 6 is a side cross sectional view of the guiding means disclosed in Figure 5 taken along the lines 6-6;

Figure 7 is a perspective view showing the guiding means and edge detection means employed by the instant invention in their operative position;

Figure 8 is a front view of the edge detection means employed by the instant invention shown in its operative position;

Figure 9 is a front view of the edge detection means employed by the instant invention shown in its retracted position.

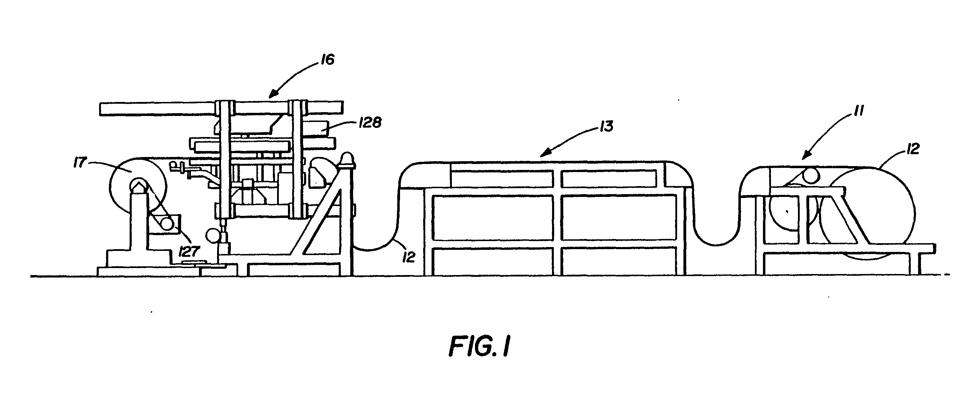

Referring now to Figure 1 of the drawings, there is disclosed the apparatus of the instant invention. Specifically, there is provided a server 11 having disposed therein a continuous roll of ply material 12, The ply material 12 is fed from the server 11 in a conventional manner to conveyor 13. The conveyor 13 is adapted to allow lengths of ply material from different rolls to be joined in order to form a continuous length of ply material. After passing over the conveyor 13, the ply material 12 is provided to ply applicator 16 which is adapted to sever a predetermined length of ply material from the continuous length and apply the severed portion of ply material to a tire building drum indicated as 17. It should be appreciated that the conveyor 13 and the server 11 are conventional in structure and are well known to those skilled in the art. The operation is controlled by computer control 128.

In operation, the ply applicator 16 grasps the end of the ply material 12 and moves it to the top of the tire building drum 17 and presses the end of the ply material 12 to the top of the tire building drum 17, thus, causing the ply material 12 to adhere to the top of the tire building drum due to the tackiness of the ply material 12 and a series of vacuum orifices disposed in the tire building drum 17. The tire building drum 17 is then rotated in order to cause the ply material 12 to partially wrap around the tire building drum 17. After a sufficient portion of ply material 12 has been wrapped on the tire building drum 17, the ply material 12 is severed by a cutting mechanism contained within the ply applicator 16. The cutting mechanism contained within the ply applicator measures the angles of both the leading edge and the trailing edge of the severed piece of ply material 12. The ply applicator 16, in conjunction with rotation of the tire building drum 17, then causes the remainder of the cut piece of ply material 12 to be applied to the tire building drum 17 in such a manner that the leading edge of the severed piece of stabiliser material is in substantial contact with the trailing edge of the severed piece of ply material. Due to variances in the angle at which the ply material is cut, the angle of the leading edge at the ply material 12 often differs from the angle of the trailing edge at the ply material. In order to effectively join the leading and trailing edges of the ply material 12, it is necessary that the leading and trailing edges be disposed at substantially the same angle. The ply applicator causes the trailing edge to be rotated prior to application to the tire building drum in order to assume an angular orientation substantially the same as the leading edge. The severed piece of ply material is also slightly stretched by the ply applicator in order to correct the length at the severed portion.

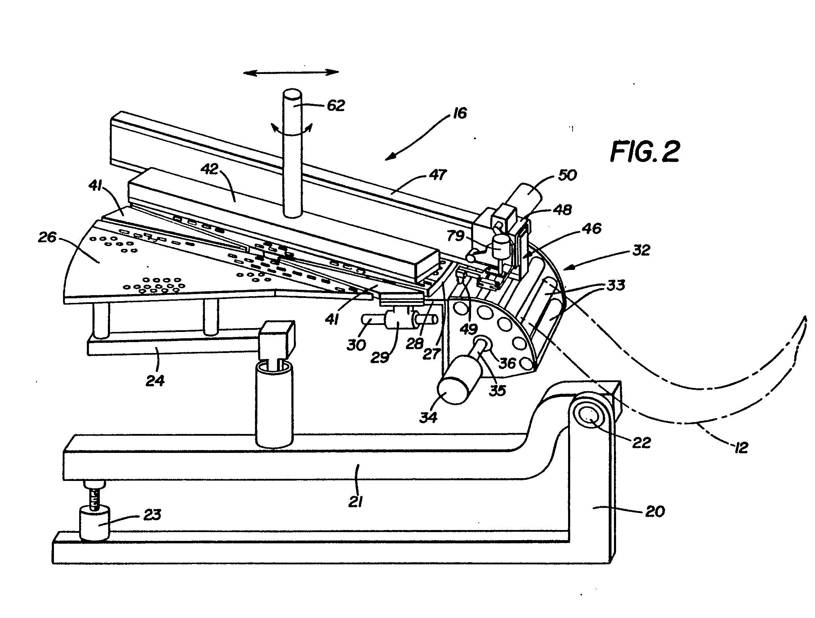

Referring now to Figure 2 of the drawings, there is shown a simplified schematic diagram showing the major operative elements of the ply applicator 16. The ply applicator 16 rests on base 20. Subframe 21 is supported upon the base 20 by means of pivot connections 22 and jackscrews 23. The subframe 21 may be pivoted about the pivot connection 22 relative to the fixed base 20 by extending or contracting by the jack screws. This pivoting allows the end of the ply applicator 16 to be raised or lowered to accommodate different sizes of drum.

Pivotally supported on the subframe 21 is table support 24 adapted to support front table 26. Associated with the front table 26 is rear table 27 which is pivotally mounted to mounting member 28. The front and rear tables 26, 27 have orifices in the surface thereof in order to provide a vacuum or source of purge air to the tables 26, 27. The mounting member 28 is fixedly attached to slide 29 which allows longitudinal movement of the slide 29 along its corresponding bearing surface 30 and hence provides a longitudinal movement of the rear table 27 with respect to the front table 26.

Fixedly attached to the mounting member 28 is roller assembly 32. The roller assembly 32 is comprised of a series of rollers 33 adapted to feed and guide the ply material 12 from the conveyor 13 to the rear table 27. The roller assembly 32 may be laterally displaced with respect to the rear table 27 by means of stepper motor 34 acting in conjunction with drive screw 35 which in turn engages drive nut 36 which is fixedly attached to the roller assembly 32.

Disposed between the front table 26 and the rear table 27 are wedge members 41 that are movable from a position wherein the top surface of the wedge members 41 is substantially even with the top surfaces of the front and rear tables 26 and 27 to a position where the top surface of the wedge members 41 are substantially below the top surfaces of the front and rear tables.

Disposed above the front table 26 and substantially parallel to the space between the front and rear tables is manifold 42. The manifold 42 may be moved along the longitudinal axis of the ply applicator 16 as generally shown by the arrows. In addition, the manifold 42 may be rotated about its central axis also as shown in the drawing. Disposed along the bottom of the manifold 42 is a silicone rubber surface having generally oblong orifices therein which are in communication with a source of vacuum or alternatively may be connected to a source of purge air.

Disposed beside and substantially parallel to the manifold 42 is knife assembly 46. The knife assembly 46 is mounted on subframe 21 and is comprised of support rail 47 upon which is carried knife transport 48. The knife transport 48 enables the cutting edge of the knife 49 to be raised or lowered relative to the plane of the front and rear tables 26, 27. Rotary encoder 79 is provided in order to measure the angular displacement of the knife 49. A stepper motor 50 is adapted to move and measure the displacement of the knife 49 along the support rail 47.

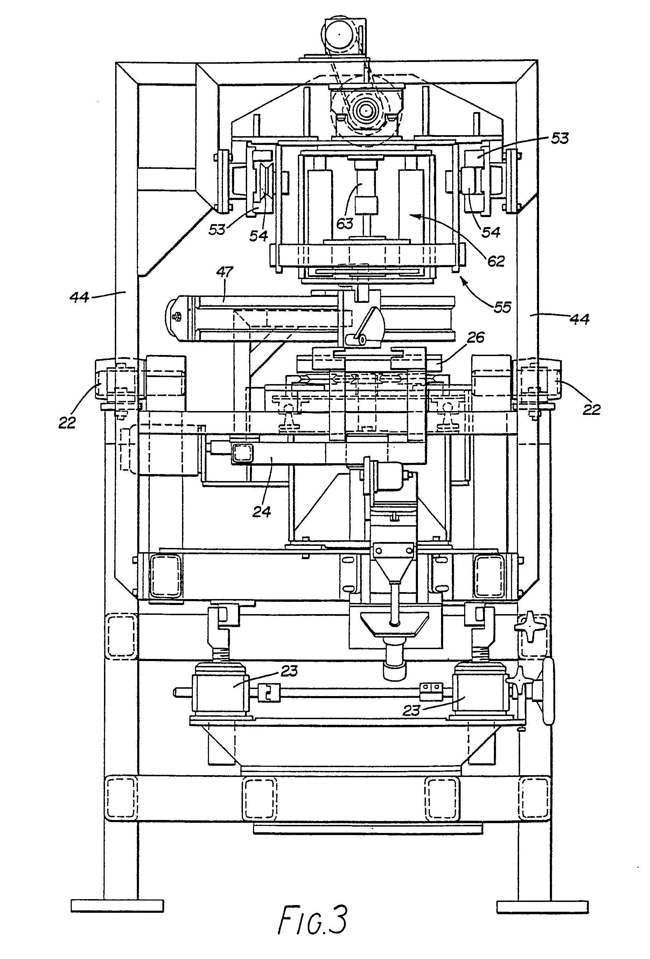

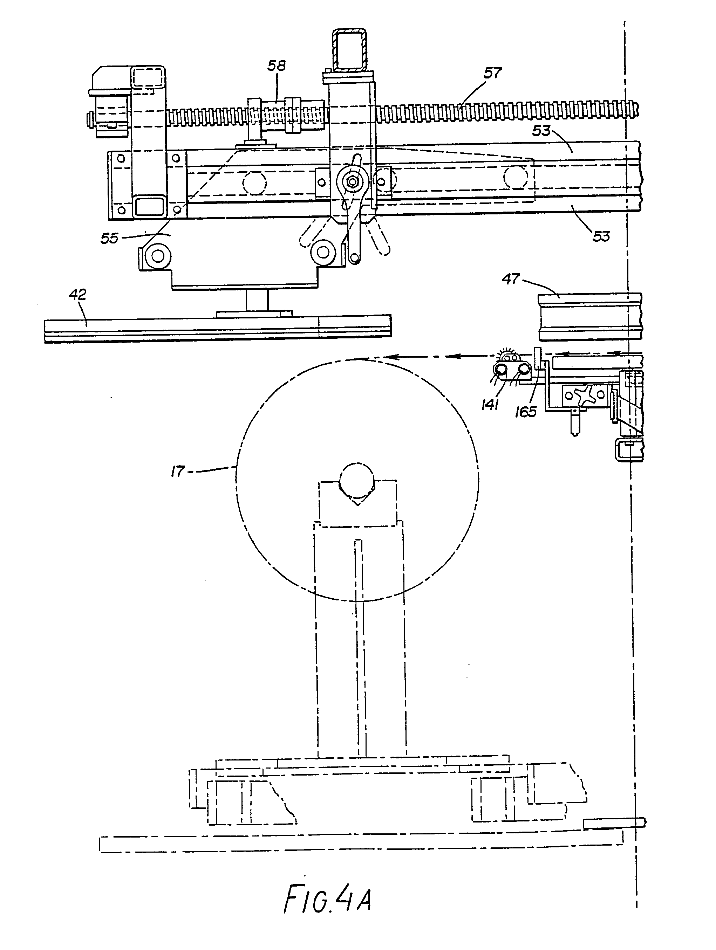

Figures 3 and 4 show further details of construction of the ply applicator 16 shown in a front view in Figure 3 and in a side view in Figure 4. The ply applicator 16 includes a base 20 having mounted thereon subframe 21. Pivotally supported on the subframe 21 is table support 24. Mounted on the table support 24 is front table 26. The front and rear tables 26 and 27 may be rotated relative to the subframe 21 by means of rollers 43 which are adapted to allow the rear table 27 and table support 24, and thus the front table 26, to be rotated with respect to the subframe 21. In the exemplary embodiment the tables 26 and 27 are rotated such that the space between them assumes the nominal angle at the cords in the ply material 12.

On the subframe 21 are four support members 44. The support members 44 are adapted to hold rail assembly 52 in a fixed position with respect to the subframe 21. Mounted on the support members 44 are rail members 53 which are adapted to receive roller members 54. Associated with the roller members and supported by said roller members is carriage assembly 55. The carriage assembly 55 is adapted to be transported along the rail members 53 on said roller members 54 by means of stepper motor 56 rotating ball screw 57 and engaging nut 58 fixedly attached to the carriage 55. It may now be appreciated that by selective actuation of the stepper motor 56 and the subsequent rotation of ball screw 57, the carriage 55 may be selectively moved along the rail members 53. Associated with the carriage 55 is lift mechanism 62 which is comprised of an air cylinder 63 having one end thereof affixed to the upper portion of the carriage 55 and the other end thereof affixed to a lower portion slidable with respect to the carriage 55 in a vertical direction. Affixed to the lift mechanism 62 is manifold 42 which is utilised in the manner described above.

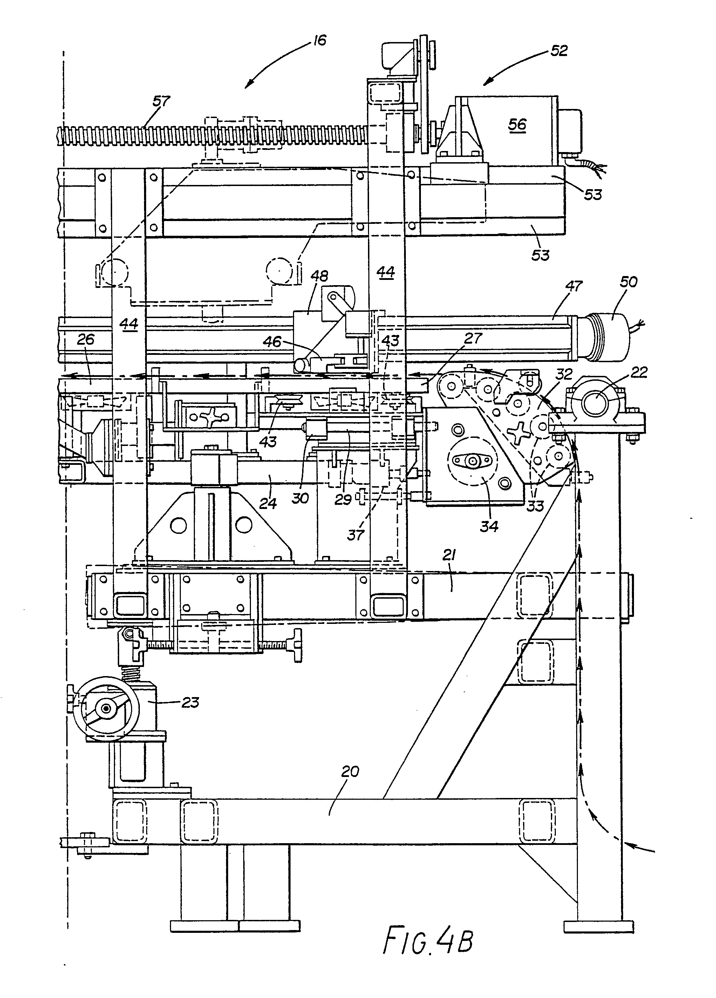

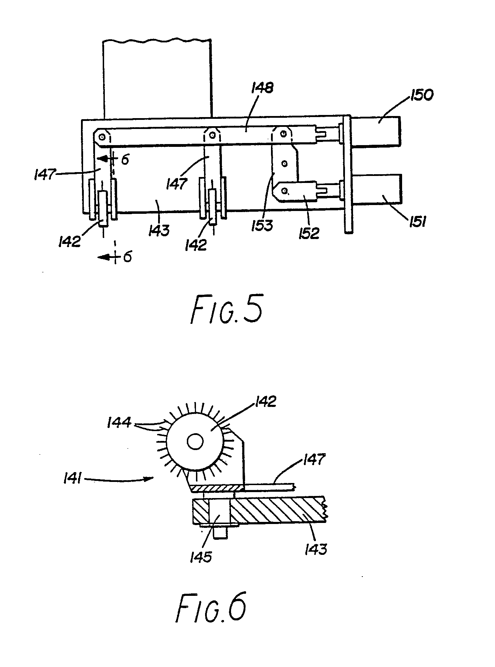

Referring now to Figures 5, 6 and 7 there are shown further details of a centering mechanism 141 according to the invention, for maintaining the ply material 12 centrally disposed within the ply applicator 16. The centering mechanism 141 is comprised of two drive wheels 142 which have disposed about the periphery thereof a series of pointed projections 144. The guide wheels 142 are mounted on the ply applicator 16 in such a manner that the bottom surface of the ply material 12 is adapted to rest on the pointed projections 144 of the guide wheels 142. It may be appreciated by one skilled in the art that the pointed projections 144 will very slightly penetrate the bottom surface of the ply material 12 such that a functional relationship is established between the ply material 12 and the pointed projections 144. As may be readily appreciated this functional relationship will cause the ply material 12 to be displaced and steered in response to the angular orientation of the guide wheels 142. As shown most clearly in Figure 6 of the drawings, each of the guide wheels 142 is pivotally mounted to mounting member 143 by a pivot mount 145.

Fixedly attached to each of the pivot mounts 145 are links 147 which have the opposite end thereof pivotally affixed to transverse link 148. It may now be appreciated that lateral movement of the transverse link 148 with respect to the centre line of the ply material 12 will cause the guide wheels 142 to be pivoted about pivot mount 145. Due to the functional relationship of the ply material 12 following the angular orientation of the guide wheels 142, it may now be appreciated that as the guide wheels 142 are angularly displaced there will be caused a similar displacement of the ply material 12 with respect to the ply applicator 16 and a tendency of the material to be steered in the same direction.

Transverse movement of the transverse link 148 is effected by selective actuation of solenoids 150 and 151. The output shaft of solenoid 150 is pivotally affixed to one end of the transverse link. The output shaft of the solenoid 151 is pivotally affixed to solenoid link 152, which link has the opposite end thereof pivotally affixed to pivoting link 153. The pivoting link 153 is also pivotally affixed to the transverse link 148 at a position between the pivot connection with respect to solenoid 150 and the pivot connection of the nearest fixed link 147. It may now be appreciated that selective actuation of the solenoids 150 and 151 will cause a rotation of the pivoting link 153 and hence a lateral movement of transverse link 148 causing a rotation of fixed links 147 and their associated guide wheels 142 having exposed on the periphery thereof pointed projections 144 which are oriented by means of solenoids 150 and 151.

It may now be appreciated that there has been disclosed a means for guiding the ply material 12 within the ply applicator 16 in order to cause the ply material 12 to be centered within the ply applicator by means discussed more fully below.

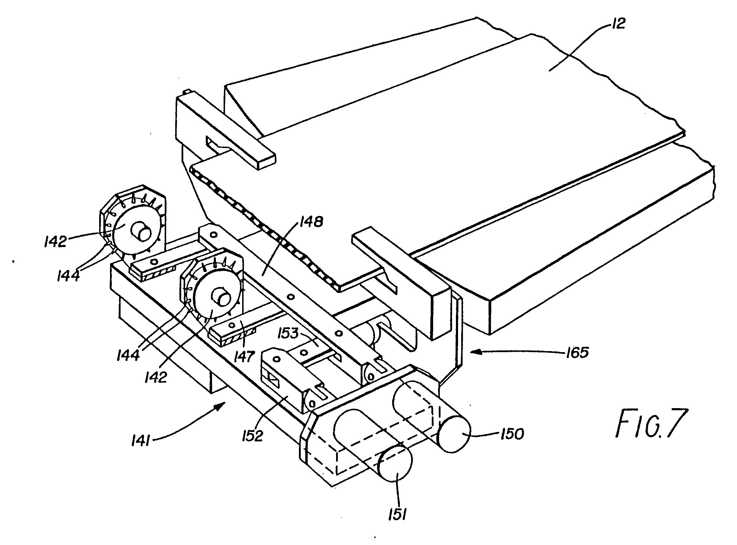

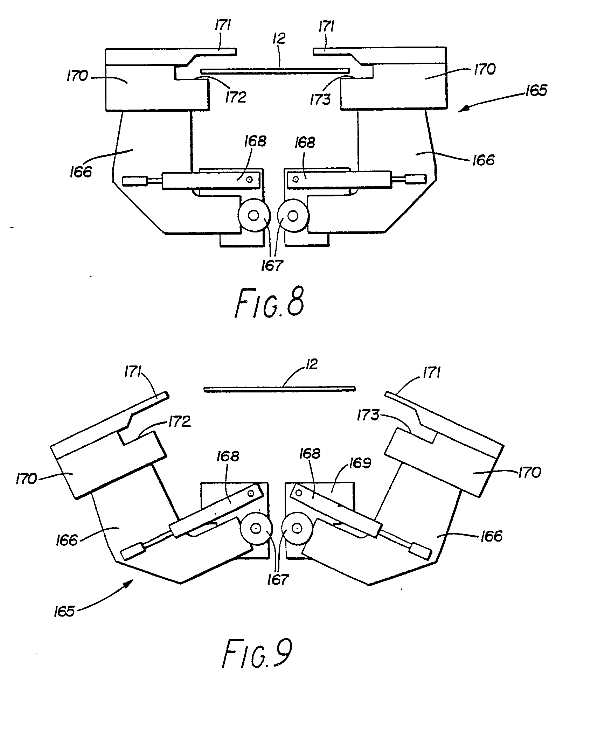

Referring now to Figures 7, 8 and 9 of the drawings, there are disclosed the details of construction of the edge detecting means 165 utilised by the ply applicator 16 in order to provide an output signal to centering mechanism 141 in order to maintain the ply material 12 centrally located within the ply applicator 16. The edge detecting means 165 is composed of two mirror image components disposed below and beside the ply material 12 and affixed to mounting means 169.

The edge detecting means is comprised of support arms 166 which are pivotally mounted by pivot mounts 167 in order to pivot with respect to mount 169. The support arms 166 are pivoted by air cylinders 168 in order that they may be moved aside to permit passage of the manifold 42 therebetween. Disposed on the upper portion of the support arms 166 are photo detector mounts 170 having photo detectors 172, 173 disposed therein for use in conjunction with reflective surfaces 171 mounted over the photo detectors and adapted to be used in conjunction with the photo detectors mounted in the photo detector mount 170 in order to detect the presence of an object disposed between the photo detectors 172 and 173 and the reflective surface 171.

In operation, the edge detecting means 165 has support arms 166 pivoted into position in order that the edges of the ply material 12 are disposed between the photo detector mount 170 and the reflective surfaces 171. As the ply material 12 is passed by the edge detecting means 165, the photo detectors are utilised to sense the position of the edge of the ply material 12. The output of the edge detecting means 165 is provided to centering mechanism 141 in order to cause the ply material 12 to be centrally located within the ply applicator 16. In the exemplary embodiment only one edge is detected.

The present invention can be utilised in a tire building apparatus which is described in its entirety in our EP-A-0 125 882. This apparatus also incorporates inventions which are claimed in our EP-A-0 125 147, EP-A-0 125 148 and EP-A-0 125 882.

EP-A-0 125 147 relates to a method for cutting a planar material having reinforcing members therein, which comprises the steps of; transporting a knife to a location above said planar material and adjacent to an intended cut line transverse to the longitudinal axis of said planar material; plunging said knife into said planar material between adjacent reinforcing members so as to displace said planar material about said knife; translating said knife to produce an actual cut line to the edge of said planar material; and supporting said knife by pivot means so as to allow said actual cut line to lie between said adjacent reinforcing members; characterised by producing a signal indicative of said actual cut line resulting from the pivotal and translational movement of said knife; and utilising said signal to control a subsequent stage of processing the material.

EP-A-0 125 148 relates to cutting means adapted to sever a planar material having reinforcing cords therein, comprising a planar metallic body portion mounted for displacement parallel to said planar material; a point on said body portion; a knife edge on said body portion proximate to said point; and a notch associated with said body portion and located proximate to said edge characterised in that said knife edge includes at least one curvilinear portion, that the body portion is additionally mounted for movement in its own plane about a pivot, and that displacement means are associated with said planar metallic body portion for rotating said body portion about said pivot to impart a rotation to said curvilinear knife edge while simultaneously causing said edge to be displaced towards the planar material to be cut.

EP-A-0 125 882 relates to a method for applying a piece of sheet elastomeric material to a cylinder from an indefinite length of such material, by cutting the length at an angle to define the piece by front and rear cut edges, the rear cut edge providing a front cut edge for further piece of said material to be applied in a succeeding cycle of operation, applying the front cut edge to the cylinder, and subsequently applying the rear cut edge to the cylinder in alignment with the front cut edge thereon, characterised by: detecting the cutting angle of the front cut edge and producing a first signal representative thereof; applying said front cut edge to said cylinder; detecting the cutting angle of the rear cut edge and producing a second signal representative thereof; picking up said rear cut edge by applicator means orientated in response to said second signal; rotating said applicator means in response to said first signal so as to rotate said rear cut edge to the front edge cutting angle; and applying said rear cut edge to said cylinder so as to abut said first cut edge.

## Claims

1. A method for positioning an elastomeric sheet material within a processing machine by transporting said material over at least one rotatable member; and rotating said rotatable member about an axis orthogonal to the surface of said material, characterised by:
    sensing the location of one edge of said material;
    providing an output responsive to the sensing of the location of said one edge of said material;
    contacting the surface of said material with surface engaging means on said at least one rotatable member; and
    rotating said at least one member about said orthogonal axis in response to the output responsive to the sensing of the location of one edge of said material.

2. An apparatus for positioning a length of elastomeric material (12) within a processing machine, comprising
    a material support (141) including at least two rotatable members (142), and
    steering means (145-153) for displacing angularly said rotatable members about an axis orthogonal to said elastomeric material; characterised by:
    edge sensing means (165) adapted to sense the edge of said length of elastomeric material;
    means (144) disposed about the peripheries of said rotatable members to engage the surface of said material as it advances; and
    control means in electrical communication with said edge sensing means (165) and said steering means and adapted to control said steering means in response to electrical signals received from said edge sensing means.

3. The apparatus of claim 2, characterised in that said edge sensing means (165) comprises at least one photo detector (172, 173).

4. The apparatus of claim 2 or 3, characterised in that each rotatable member (142) comprises a circular member and the surface engaging means comprise projections (144) disposed about its periphery, each circular member being rotatable about its axis and angularly displaceable with respect to said orthogonal axis.

5. The apparatus of claim 2, 3 or 4, characterised in that steering means (145-153) comprises a linear actuator (147-153).

6. The apparatus of any of claims 2 to 5, characterised in that steering means (145-153) comprises:

pivotal mountings (145) having the rotatable members (142) secured thereto; and

an actuator (147-153) adapted to displace the pivotal mountings.

7. The apparatus of claim 6, characterised in that said actuator is comprised of:

link means (147, 148, 152, 153) secured to said pivotal mounting (145); and

displacement means (150, 151) associated with said link means for displacing said link means.

8. The apparatus of claim 7, characterised in that said displacement means (150, 151) comprises at least one solenoid.

**Patentansprüche**

1. Verfahren zum Positionieren eines elastomeren Blattmaterials innerhalb einer Verarbeitungsmaschine durch Transport des Materials über mindestens ein Drehglied; und Drehen des Drehgliedes um eine Achse senkrecht zur Fläche des Materials, gekennzeichnet durch:

Erfassen bzw. Lesen der Lage einer Kante des Materials;

Vorsehen eines Ausgangssignals ansprechend auf das Lesen der Lage der Kante des Materials;

Berühren der Fläche des Materials mit einem Flächenberührungsmittel auf mindestens einem Drehglied; und Drehen mindestens eines Gliedes um die senkrechte Achse ansprechend auf das Ausgangssignal, das auf das Lesen der Lage der einen Kante des Materials anspricht.

2. Vorrichtung zum Positionieren einer Längeelastomeren Materials (12) innerhalb einer Verarbeitungsmaschine, umfassend:

einen Materialträger (141) einschließlich mindestens zweier Drehglieder (142); und

Lenkmittel (145 bis 153) zum winkelmäßigen Verschieben der Drehglieder um eine Achse senkrecht zum elastomeren Material;

gekennzeichnet durch:

Kantenerfassungsmittel (165), das die Kante der Länge des elastomeren Materials erfaßt bzw. liest;

Mittel (144), das um den Außenumfang der Drehglieder angeordnet ist, um die Fläche des Materials zu berühren, während es sich fortbewegt; und

Steuermittel in elektrischer Verbindung mit dem Kantenerfassungsmittel (165) und den Lenkmitteln (145 bis 153), das die Lenkmittel steuert, ansprechend auf elektrische Signale, die vom Kantenerfassungsmittel empfangen werden.

3. Vorrichtung nach Anspruch 2, dadurch gekennzeichnet, daß das Kantenerfassungsmittel (165) mindestens einen Photodetektor (172, 173) umfaßt.

4. Vorrichtung nach Anspruch 2 oder 3, dadurch gekennzeichnet, daß jedes Drehglied (142) ein kreisförmiges Glied umfaßt, und daß die Flächenberührungsmittel Vorsprünge (144) umfassen, die um seinen Außenumfang herum angeordnet sind, wobei jedes kreisförmige Glied um seine Achse drehbar und winkelmäßig in Bezug zur senkrechten Achse verschiebbar ist.

5. Vorrichtung nach Anspruch 2, 3 oder 4, dadurch gekennzeichnet, daß die Lenkmittel (145 bis 153) einen Linearantrieb (147 bis 153) umfassen.

6. Vorrichtung nach irgendeinem der Ansprüche 2 bis 5, dadurch gekennzeichnet, daß die Lenkmittel (145 bis 153) folgendes umfassen:

schwenkbare Lager (145) mit daran befestigten drehbaren Gliedern (142); und

einen Antrieb (147 bis 153), der die schwenkbaren Lager verschieben kann.

7. Vorrichtung nach Anspruch 6, dadurch gekennzeichnet, daß der Antrieb folgendes umfaßt:

Verbindungsglieder (147, 148, 152, 153), die am schwenkbaren Lager (145) befestigt sind; und

Verschiebungsmittel (150, 151), die mit den Verbindungsmitteln zur Verschiebung derselben verbunden sind.

8. Vorrichtung nach Anspruch 7, dadurch gekennzeichnet, daß die Verschiebungsmittel (150, 151) mindestens einen Solenoiden bzw. Hubmagneten umfassen.

**Revendications**

1. Procédé pour positionner une matière en feuille élastomérique dans une machine de traitement en transportant ladite matière sur au moins un élément rotatif; et en faisant tourner ledit élément rotatif autour d'un axe orthogonal à la surface de ladite matière, caractérisé en ce qu'il consiste:

à détecter la position d'un premier bord de ladite matière;

à produire un signal de sortie en réponse à la détection de la position dudit premier bord de ladite matière;

à mettre en contact la surface de ladite matière avec des moyens de prise de surface sur ledit, au moins un, élément rotatif; et

à faire tourner ledit, au moins un, élément autour dudit axe orthogonal en réaction au signal de sortie produit en réponse à la détection de la position d'un premier bord de ladite matière.

2. Appareil pour positionner une longueur de matière élastomérique (12) dans une machine de traitement, comprenant

un support (141) de matière comprenant au moins deux éléments rotatifs (142) et

des moyens de direction (145-153) destinés à déplacer angulairement lesdits éléments rotatifs autour d'un axe orthogonal à ladite matière élastomérique;

caractérisé par;

des moyens (165) de détection de bord conçus pour détecter le bord de ladite longueur de matière élastomérique;

des moyens (144) disposés autour des périphéries desdits éléments rotatifs pour porter contre la surface de ladite matière pendant qu'elle avance; et

des moyens de commande en communication électrique avec lesdits moyens (165) de détection de bord et lesdits moyens de direction et conçus pour commander lesdits moyens de direction en réponse à des signaux électriques reçus desdits moyens de détection de bord.

3. Appareil selon la revendication 2, caractérisé en ce que lesdits moyens (165) de détection de bord comprennent au moins un photodécteur (172, 173).

4. Appareil selon la revendication 2 ou 3, caractérisé en ce que chaque élément rotatif (142) comprend un élément circulaire et les moyens de prise de surface comprennent des saillies (144) disposées autour de sa périphérie, chaque élément circulaire pouvant tourner autour de son axe et pouvant être déplacé angulairement par rapport audit axe orthogonal.

5. Appareil selon la revendication 2, 3 ou 4, caractérisé en ce que les moyens de direction (145-153) comprennent un actionneur linéaire (147-153).

6. Appareil selon l'une quelconque des revendications 2 à 5, caractérisé en ce que les moyens de direction (145-153) comprennent:

des moyens de montage pivotants (145) auxquels les éléments rotatifs (142) sont fixés; et

un actionneur (147-153) conçu pour déplacer les moyens de montage pivotants.

7. Appareil selon la revendication 6, caractérisé en ce que ledit actionneur est constitué par:

des moyens à biellettes (147, 148, 152, 153) fixés auxdits moyens de montage pivotants (145); et

des moyens de déplacement (150, 151) associés auxdits moyens à biellettes pour les déplacer.

8. Appareil selon la revendication 7, caractérisé en ce que lesdits moyens de déplacement (150, 151) comprennent au moins une bobine.

FIG.1

FIG.2

EP 0 125 146 B1

FIG.3

FIG.4A

4

FIG.4B

FIG.5

FIG.6

FIG.7

FIG.8

FIG.9